# EUROPEAN PATENT SPECIFICATION

(11) **EP 3 270 149 B1**
(45) Date of publication and mention of the grant of the patent: **04.12.2019**
(21) Application number: 16178813.8
(22) Date of filing: 11.07.2016
(51) Int. Cl.: G01N 29/024, G01N 29/22, G01N 29/32, G01N 29/34, G01N 29/38, G01N 29/44

(54) **METHOD AND ARRANGEMENT FOR THE ANALYSIS OF GAS CHARACTERISTICS BY MEASURING SPEED OF SOUND**
VERFAHREN UND ANORDNUNG ZUR ANALYSE VON GASEIGENSCHAFTEN DURCH MESSUNG VON SCHALLGESCHWINDIGKEIT
PROCÉDÉ ET DISPOSITIF POUR L'ANALYSE DES CARACTÉRISTIQUES DE GAZ PAR MESURE DE LA VITESSE DU SON

(43) Date of publication of application: 17.01.2018
(73) Proprietor: Rüeger S.A., 1023 Crissier (CH)
(72) Inventor: WILLING, Bert, 1807 Blonay (CH)
(74) Representative: Klocke, Peter

(56) References cited:
- EP-A2- 0 141 546
- US-A- 3 869 915
- US-B1- 6 227 058

## Description

The present invention concerns the determination of gas composition, temperature and/or humidity of a gas by measuring the speed of sound with a sound sender and a sound receiver both mounted on a common structure. The present invention further concerns a method for determining the humidity of the scavenge air of an internal combustion engine. The invention further concerns a gas sensor arrangement adapted to determine gas composition, temperature and/or humidity of a gas based on the speed of sound, comprising a sender, a receiver and a signal processing unit.

It is well known to use the speed of sound in a gas for measuring its temperature/humidity or its composition since the speed of sound is only influenced by its temperature and its composition. Measuring the speed of sound can therefore yield the temperature for a gas with known composition, or the composition of a gas at the known temperature. The measurement can be performed with ultrasonic sound or non-ultrasonic sound. Thus, the term "sound" includes both kinds of sound. If the temperature of the gas is known, it is also possible to determine the humidity. The speed of sound is usually measured by determining the time that an acoustic signal needs to travel the distance between a sender and a receiver. This can be done by sending pulsed signals and measuring the delay for the signal to be detected at the receiver, or by sending a continuous signal and measuring the phase angle between the excitation of the sender and the signal of the receiver.

Concerning the state of the art reference is made, by way of example, to application documents EP 0 141 546 A2 and US 3 869 915 A.

Document EP 0 141 546 A2 discloses a fluid flow meter, especially. an airflow meter having fast response and very high resolution uses two piezoelectric transducers operating near resonance to pass ultrasonic signals upstream and downstream alternately in a flow passage. Transmission signals continue longer than the propagation time to the receiver so that the phase of the received signals can be compared to the transmission signals. The difference of upstream and downstream phase differences is a measure of the air velocity while the sum of those phase differences is useful to determine air temperature. These values along with an air pressure sensor reading are combined to determine mass airflow through the passage.

Document US 3 869 915 A teaches a digital flowmeter with axially spaced transducers clamped on the exterior of a fluid conducting conduit. Sonic energy from the first transducer is applied through the pipe and into the medium and the time taken to reach the second transducer is counted. Sonic energy is then sent from the second transducer, through the medium, to the first transducer and the time taken to reach the first transducer is counted and subtracted from the first time. This difference is then displayed as a function of flow.

For certain sensing applications it is advantageous to mount sender and receiver onto a common structure in order to obtain a self-contained sensor. Sender and receiver can be mounted face by face or in parallel, with the sound traveling via a reflector from the sender to the receiver. In such a case, that common structure will transmit part of the sound energy directly from the sender to the receiver without passing through the measurement gas. Due to the large speed of sound in solids, especially metals, the wavelength of sound in solids is about one order of magnitude larger than in gas, so that the sound travelling via the structure has a different phase angle at the receiver than the sound traveling by the gas. Typically, the variation of the speed of sound with temperature in a solid is relatively small compared to the speed of sound in a gas, and is of the opposite sign.

As both the structure-borne and the gas-borne sound are of the same frequency, the receiver will produce a signal of which the amplitude and phase are composed of both components. Without additional information, it is therefore not possible to separate the gas-borne signal.

As long as the structure-borne amplitude is less than a few percent of the total sound amplitude at the receiver, its effect on the quality of the measurement is low. However, notably when both transducers are mounted close together in parallel, the amplitude of the structure-borne sound is significant. It can be reduced by mechanical means, i.e. a construction of the structure which limits and/or damps sound transmission. However, such a mechanical solution is expensive and/or poses problems at elevated temperatures.

Therefore it is an object of the present invention to propose another possibility to determine gas composition, temperature and/or humidity of a gas by measuring the speed of sound in the gas, using a sender and a receiver both mounted on a common structure, which avoids the above mentioned drawbacks.

This object is solved according to the invention as claimed. The independent claim 1 claims a method for measuring the speed of sound and the claim 5 claims a gas sensor arrangement based on the speed of sound. Advantageous embodiments are claimed in the respective subclaims.

According to the invention, structure-borne sound influence on the speed of sound measurements is suppressed by a signal separation in time. The method comprises the following features:
- providing a structure having a speed of sound which is higher than the speed of sound in the gas serving as a common structure for the sender and the receiver,
- arranging the sender and the receiver on that common structure side by side in parallel within a distance of less than 10 mm such that the sound emitted by the sender reaches the receiver via an acoustical reflector,
- operating the sender during at least one period of time in an "on"- status such that the sender sends an acoustical signal and operating the sender during at least one period of time in an "off'-status such that the sender does not send an acoustical signal,
- operating the receiver in an "off'-status for at least one period of time during the "on"-status of the sender and operating the receiver in an "on"-status for at least one period of time during the "off'-status of the sender,
- integrating the signal of the receiver by an amplifier, calculating the speed of sound from the phase angle difference between the sender excitation and the receiver signal and determining the gas composition, the temperature and/or the humidity based on the speed of sound.

The common structure in general can be made of any solid material which provides a speed of sound which is higher than the speed of sound in the gas. This requirement is fulfilled especially by metal. A preferred material is steel, which has as speed of sound of approximately 4000 m/s. The sender and the receiver are arranged on that structure such that the sound emitted by the sender reaches the receiver via an acoustical reflector. This provides a significantly shorter travel path of the structure-borne sound in comparison to sender and receiver being arranged face to face, and therefore facilitates the temporal separation. This is further supported by arranging the sender and the receiver according to a further preferred embodiment within a distance of less than 10 mm preferably in the region of 4 mm.

By operating the sender in the above mentioned "on"-status whereas at the same time the receiver operates in an "off'-status and vice versa the gas-borne and the structure-borne contributions can be separated in time. In view of the different speed of sound in the different materials, for example, the sender is operated during a first period, while the input from the receiver to the amplifier is switched off. During the next period, which can be different in the duration from the first period, the sender is switched off while the signal of the receiver is measured by the amplifier. As the last structure-borne sound will reach the receiver depending on the speed of sound almost immediately after the sender has been switched off, the structure-borne contribution to the receiver signal will be reduced to a certain amount, which depends on the kind of material and the arrangement of sender and receiver. The structure-borne contribution can be reduced further by introducing a delay of some few microseconds between switching off the sender, and switching on the receiver. Such a delay might be necessary if internal reflections of the sound within the structure delay the transition time of the structure-borne sound.

As the overall noise level of the measurement strongly depends strongly on the number of over how many signal oscillations the amplifier is able to integrate, the "on" time of the receiver should correspond to the time of travel of the gas-borne sound. For the same reason, the "on" time of the sender should span the same amount of time, so that the duty cycles of sender and receiver are both 50% with a phase shift of π. With a lock-in amplifier it is possible to integrate the receiver signal continuously over extended periods of time. The amplitude measured by the lock-in amplifier will be half of a continuous signal, whereas the phase angle information is entirely maintained. In this case, the reference channel between the function generator driving the sender and the lock-in amplifier must be open all the time.

According to preferred embodiment of the invention, the "on"-status of the receiver starts with a delay after the end of the "on"-status of the sender in case of internal reflections as mentioned above.

It is also possible that the sender and the receiver are never operated in their respective "on"-status simultaneously or in other words that the sender and the receiver are operated alternately.

It is proposed that the duration of the "on"-status of the receiver corresponds to the travel time of the sound through the gas. The travel time of the sound depends on the distance the sound has to travel between the sender and the receiver and the speed of sound in the gas. By having an "on"-status which corresponds to the travel time, an optimal amount of the signal is available for further determination. Respectively, it is advantageous if the duration of the "on"-status of the sender corresponds to the travel time of the sound through the gas.

Preferably the duty cycle in the "on"-status of the receiver and the "on"-status of the sender is maintained with same amount of time for obtaining optimal determination conditions with duty cycles of sender and receiver both being 50% with a phase shift of π.

As mentioned above with the amplifier it is possible to integrate the signal of the receiver over a number of switching periods. In a preferred embodiment the signal of the receiver is integrated by the amplifier over extended periods of time.

In order to achieve the separation in time which allows the determination of the variations of the speeds of sound with high resolution according to the first advantageous embodiment, the invention comprises a mechanical structure having a speed of sound being at least five times, preferably ten times, faster than the speed of sound in the gas.

A special application of the method described above is the measurement of the humidity of engine scavenge air. For the right stoichiometric fuel rate in an internal combustion engine, most notably large industrial and marine engines, as well as some trucks and heavy machinery, it is necessary to measure the humidity in the scavenge air. In view of the high temperature and pressure in the region between a turbocharger and the combustion chamber, state-of-the-art measurement devices for determining the humidity are influenced by the gas conditions. In view of this, according to the preferred embodiment, the method described before above can be used for adjusting the relationship between intake air and fuel of an internal combustion engine by determining the humidity of the engine scavenge air.

The speed of sound-based gas sensor arrangement adapted to determine gas composition, temperature and/or humidity of a gas on the basis of the speed of sound comprises means being adapted to perform the method as claimed and described above.

Especially, the gas sensor arrangement adapted to determine gas composition, temperature and/or humidity of a gas on the basis of the speed of sound, comprises a sender, a receiver and a signal processing means as known. According to the invention the arrangement comprises a sound sender and an acoustical receiver both mounted on a common structure side by side in parallel within a distance of less than 10 mm in such a way that the sound emitted by the sender reaches the receiver via an acoustical reflector, wherein preferably the acoustical reflector is a wall of a pipe or a wall of a housing of a chamber and that the gas to be measured is within that pipe or chamber, wherein the common structure having a speed of sound which is higher than the speed of sound in the gas, and wherein the signal processing means operates the sender during a least one period of time in an "on"-status by sending an acoustical signal and during at least one period of time in an "off'-status without sending an acoustical signal, operates the receiver in an "off"-status during at least one period of time of the "on"-status of the sender and in an "on"-status during at least one period of time of the "off'-status of the sender, and integrates the signal of the receiver, calculates the speed of sound and determines the gas composition, the temperature and/or the humidity of the gas based on the speed of sound and provides a respective output signal for further treatment.

With the present invention it is therefore possible to suppress the structure-borne sound influence on a speed of sound measurement with low cost and high stability. This allows to use the method or the arrangement for applications in which the determination of gas characteristics, such as gas composition, temperature and/or humidity was either not possible or did not work with the required sensitivity or accuracy.

In the following, embodiments of the invention are described in detail in connection with the drawings. However, the invention is not limited to the examples described in connection with the drawings and includes all embodiments covered by the claims.

The figures show:
- Figure 1: a principle depiction of a gas sensing arrangement comprising a sender and a receiver on a common structure and reflection means arranged apart from the sender and the receiver such that the sound excited by the sender travels via the reflection means to the receiver through the gas for providing a gas-borne signal,
- Figure 2: another principle depiction of a gas sensing arrangement comprising a sender and a receiver on a common structure wherein sender and receiver are arranged such that the sound travels directly from the sender to the receiver through the gas between the sender and the receiver for providing a gas-borne signal,
- Figure 3: the principle depiction of Figure 2 together with a block diagram of a signal processing unit comprising signal processing means, and
- Figure 4: a diagram of the cycle times of the sender and the receiver with different receiver cycle times.

The principle of the common structure with the sender and the receiver with or without reflection means can be used in all applications which require a reliable system in extreme environment conditions for systems, such as for example in combustion engine exhaust applications or applications which require measurements across large temperature ranges.

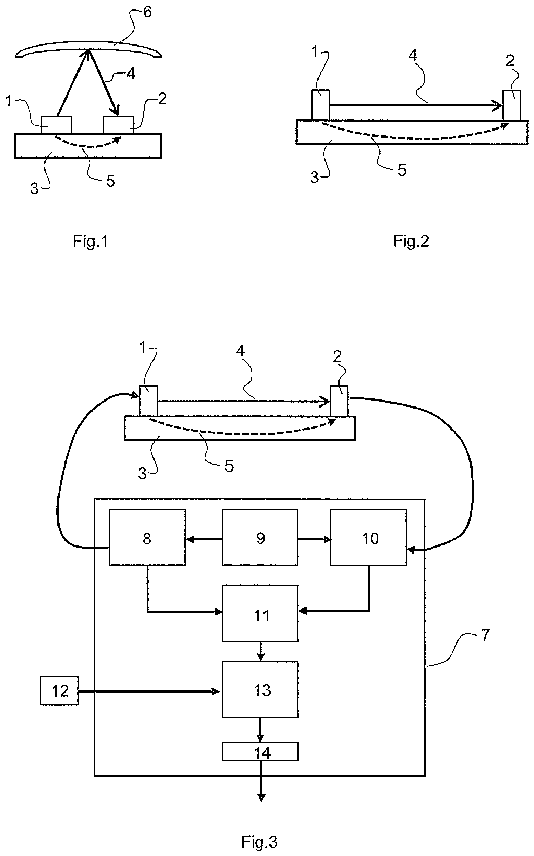

Figure 1 shows a mounting structure 3 with a sender 1 and a receiver 2 mounted on that structure 3. Sender 1 and receiver 2 are mounted such that the sound propagation 4 from the sender 1 to the sender 2 travels via an acoustic reflector 6 before reaching the sender 2. That sound provides a gas-born signal. The sound propagation 5 of the sound provided by the sender 1 travels via the structure 3 to the receiver 2 thereby providing a structure-born signal.

Figure 2 shows a mounting structure 3 in which the sender 1 and the receiver 2 mounted on that structure 3 are arranged in a face to face position wherein the sound propagation 4 is directly from the sender 1 to receiver 2 without a reflector in the sound path. In contrast to the arrangement of figure 1, sender 1 and receiver 2 are arranged with a much larger distance between them. The distance between the sender 1 and receiver 2 in the arrangement according to figure 1 is less than 10 mm, preferably around 4 mm, whereas the distance in the arrangement of figure 2 is in the order of 50-100 mm. It is important that the propagation times, i.e. time that the sound needs from the sender 1 to the receiver 2 via the different media (gas or solid material), differ significantly in order to determine the speed of sound of the gas after processing the received signals with a sufficient accuracy. Similar to figure 1, the sound traveling directly through the gas from the sender 1 to the receiver 2 provides the gas-borne signal and the sound propagation 5 through the structure from the sender 1 to the receiver 2 provides the structure-borne signal. The acoustical reflector 6 can be a wall of a pipe or a wall of a housing of a chamber and the gas to be measured is within that pipe or chamber (not depicted).

In figure 3 a block diagram is shown depicting a signal processing unit 7 comprising a microprocessor 13 and a sound function generator 8 which provides an ultrasound in this embodiment. The sound function generator 8 is connected with the sender 1. The receiver 2 is connected with a receiver pre-amplifier/AD-converter 10 of the signal processing unit 7. The signal processing unit 7 also comprises a switching function generator which controls the sound function generator 8 and the receiver pre-amplifier/AD-converter 10 in view of their duty cycle. The sound function generator 8 is connected with a lock-in amplifier 11 as well as the receiver pre-amplifier/AD-converter 10. The sound function generator 8 provides the lock-in amplifier 11 with a respective reference signal. The lock-in amplifier 11 determines the phase angle between the reference signal delivered from the sound function generator 8 and the receiver signal from the receiver preamplifier/AD-converter 10. A microprocessor 13 of the signal processing unit 7 reads the output signal from the lock-in amplifier 11 as well as from an external temperature measurement device 12 and provides a humidity value output 14 in form of a respective signal for further processing. In another advantageous embodiment, the lock-in amplifier 11 can be integrated digitally within the microprocessor 13.

In an exemplary embodiment, the sender 1 and the receiver 2 as shown in figure 1 are mounted very closely (distance of 4 mm) in parallel on the structure 3 made of steel. The sound of speed in steel is approximately 4,000 m/s, which means that any structure-borne sound takes 1 µs to travel from the sender to the receiver.

Through the gas, the sound will travel via the acoustical reflector 6 over a total distance of 40 mm. With a sound of speed in the gas in the order of 400 m/s, the gas-borne sound takes 100 µs to travel from the sender 1 to the receiver 2.

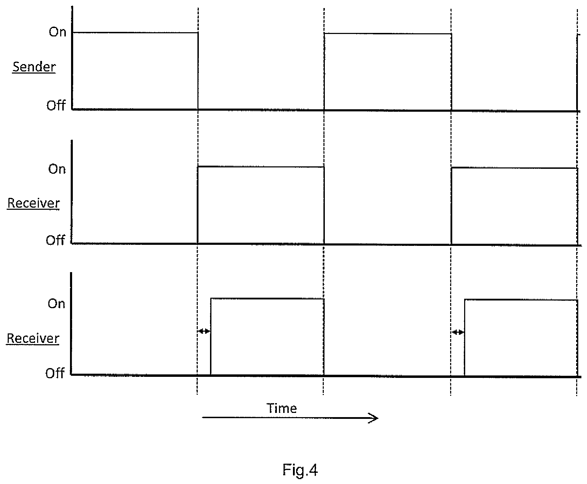

Both contributions can therefore be separated in time as shown in figure 4. In that figure the first diagram shows the duty times of the sender 1 over time. The second and middle diagram shows the duty time of the receiver 2 without delay with respect to "on"-status of the sender 1, whereas in the third and lowest diagram shows the duty time of the receiver 2 is delayed in respect to the shut-off of the sender 1. In the above example with the mentioned dimensions and material, the sender 1 is operated during 100 µs, while the input from the receiver 2 to the amplifier 10 is switched off. During the next 100 µs, the sender 1 is switched off while the signal of the receiver 2 is measured by the amplifier 10. As the last structure-borne sound will reach the receiver 2 1 µs after the sender 1 has been switched off, the structure-borne contribution to the receiver signal has been reduced to 1%, if both contributions have the same amplitude. The structure-borne contribution can be reduced further by introducing a delay of some few microseconds between switching off the sender 1, and switching on the receiver 2 as shown in the lowest diagram of figure 4. Such a delay might be necessary if internal reflections of the sound within the structure 3 delay the transition time of the structure-borne sound.

As the overall noise level of the measurement strongly depends on over how many signal oscillations the amplifier can integrate, the « on » time of the receiver 2 should correspond to the time of travel of the gas-borne sound. For the same reason, the « on » time of the sender 1 should span the same amount of time, so that the duty cycles of sender 1 and receiver 2 are both 50% with a phase shift of π.

At an operational frequency of 50 kHz, the amplifier 11 will therefore integrate the receiver's signal over 5 periods. However, with a lock-in amplifier 11 as used it is possible to integrate the receiver signal continuously over extended periods of time. The amplitude measured by the lock-in amplifier 11 will be half of a continuous signal, whereas the phase angle information is entirely maintained. In this case, the function generator 8 driving the sender 1 must supply a reference signal to the lock-in amplifier 11 all the time.

## Claims

1. Method for determination of gas composition, temperature and/or humidity of a gas by measuring the speed of sound in the gas, with a sound sender (1) and a sound receiver (2) both mounted on a common structure (3) **characterized by**
- providing a structure (3) having a speed of sound which is higher than the speed of sound in the gas,
- arranging the sender (1) and the receiver (2) on that structure (3) side by side in parallel within a distance of less than 10 mm such that the sound emitted by the sender (1) travelling through the gas can reach the receiver (2) only via an acoustical reflector (6),
- operating the sender (1) during at least one period of time in an "on"- status such that the sender (1) sends an acoustical signal and operating the sender (1) during at least one period of time in an "off"-status such that the sender (1) does not send an acoustical signal,
- operating the receiver (2) in an "off"-status for at least one period of time during the "on"-status of the sender (1) and operating the receiver (2) in an "on"-status for at least one period of time during the "off'-status of the sender (1),
- integrating the signal of the receiver (2) by an amplifier (11), calculating the speed of sound from the phase angle difference between the sender (1) excitation and the receiver (2) signal and determining the gas composition, the temperature and/or the humidity of the gas based on the speed of sound.

2. Method according to claim 1, **characterised by** starting the "on"-status of the receiver (2) with a delay after the end of the "on"-status of the sender (1).

3. Method according to anyone of the preceding claims, **characterised by** providing a mechanical structure (3) having a speed of sound being at least five times, preferably ten times, higher than the speed of sound in the gas.

4. Method for determining the humidity of the engine scavenge air according to any one of the preceding claims 1 to 3.

5. Gas sensor arrangement adapted to determine gas composition, temperature and/or humidity of a gas by measuring the speed of sound in the gas, comprising a common structure (3), a sender (1) and a receiver (2), wherein the sender (1) and the receiver (2) are both mounted on the common structure (3), a signal processing means and an amplifier (11), **characterised by** a sound sender (1) and an acoustical receiver (2), which are arranged side by side in parallel within a distance of less than 10 mm on that structure (3), whereby the sound emitted by the sender (1) travelling through the gas can reach the receiver (2) only via an acoustical reflector (6), wherein preferably the acoustical reflector (6) is a wall of a pipe or a wall of a housing of a chamber and that the gas to be measured is within that pipe or chamber, wherein the common structure (3) having a speed of sound which is higher than the speed of sound in the gas, and wherein the signal processing means (7) is configured to operate the sender (1) for at least one period of time in an "on"-status such that the sender (1) sends an acoustical signal and the signal processing means (7) is configured to operate the sender (1) for at least one period of time in an "off'-status such that the sender (1) does not send an acoustical signal, wherein the signal processing means (7) is configured to operate the receiver (2) in an "off'-status for at least one period of time during the "on"-status of the sender (1) and in an "on"-status for at least one period of time during the "off'-status of the sender (1), and wherein the signal processing means (7), especially a microprocessor (13) of the signal processing means (7), is configured to integrate the signal of the receiver (2), to calculate the speed of sound and to determine the gas composition, the temperature and/or the humidity of the gas based on the speed of sound and to provide a respective output signal.

## Patentansprüche

1. Verfahren zur Bestimmung von Gaszusammensetzung, Temperatur und/oder Feuchtigkeit eines Gases durch Messung der Schallgeschwindigkeit im Gas, mit einem Schallsender (1) und einem Schallempfänger (2), die beide auf einer gemeinsamen Struktur (3) montiert sind, **gekennzeichnet durch**
- Bereitstellung einer Struktur (3) mit einer Schallgeschwindigkeit, die höher als die Schallgeschwindigkeit im Gas ist,
- Anordnen des Senders (1) und des Empfängers (2) auf dieser Struktur (3) nebeneinander parallel in einem Abstand von weniger als 10 mm, so dass der von dem Sender (1) emittierte, durch das Gas propagierende Schall den Empfänger (2) nur über einen akustischen Reflektor (6) erreichen kann,
- Betreiben des Senders (1) während mindestens einer Zeitspanne in einem "ein"-Zustand, so dass der Sender (1) ein akustisches Signal sendet und Betreiben des Senders (1) während mindestens einer Zeitspanne in einem "aus"-Zustand, so dass der Sender (1) kein akustisches Signal sendet,
- Betreiben des Empfängers (2) in einem "aus"-Zustand für mindestens eine Zeitspanne während des "ein"-Zustand des Senders (1) und Betreiben des Empfängers (2) in einem "ein"-Zustand für mindestens eine Zeitspanne während des "aus"-Zustand des Senders (1),
- Integrieren des Signals des Empfängers (2) durch einen Verstärker (11), Berechnen der Schallgeschwindigkeit aus der Phasenwinkeldifferenz zwischen der Anregung des Senders (1) und dem Signal des Empfängers (2) und Bestimmen der Gaszusammensetzung, der Temperatur und/oder der Feuchtigkeit des Gases basierend auf der Schallgeschwindigkeit.

2. Verfahren nach Anspruch 1, **gekennzeichnet durch** Starten des "ein"-Zustandes des Empfängers (2) mit einer Verzögerung nach der Beendigung des "ein"-Zustandes des Senders (1).

3. Verfahren nach einem der vorhergehenden Ansprüche, **gekennzeichnet durch** Bereitstellung einer mechanischen Struktur (3) mit einer Schallgeschwindigkeit, die mindestens fünfmal, vorzugsweise zehnmal, höher ist als die Schallgeschwindigkeit im Gas.

4. Verfahren zur Bestimmung der Feuchtigkeit der Motoransaugluft nach einem der vorhergehenden Ansprüche 1 bis 3.

5. Gassensoranordnung zur Bestimmung von Gaszusammensetzung, Temperatur und/oder Feuchtigkeit eines Gases durch Messung der Schallgeschwindigkeit im Gas, umfassend eine gemeinsame Struktur (3), einen Sender (1) und einen Empfänger (2), wobei der Sender (1) und der Empfänger (2) beide auf der gemeinsamen Struktur (3) montiert sind, Signalverarbeitungsmittel und einen Verstärker (11), **gekennzeichnet durch** einen Schallsender (1) und einen akustischen Empfänger (2), die nebeneinander parallel in einem Abstand von weniger als 10 mm auf dieser Struktur (3) angeordnet sind, wobei der von dem Sender (1) emittierte, durch das Gas propagierende Schall den Empfänger (2) nur über einen akustischen Reflektor (6) erreichen kann, wobei vorzugsweise der akustische Reflektor (6) eine Wand eines Rohres oder eine Wand eines Gehäuses einer Kammer ist und sich das zu messende Gas innerhalb dieses Rohres oder dieser Kammer befindet, wobei die gemeinsame Struktur (3) eine Schallgeschwindigkeit aufweist, die höher als die Schallgeschwindigkeit im Gas ist, und wobei die Signalverarbeitungsmittel (7) dazu ausgebildet sind, den Sender (1) für mindestens eine Zeitspanne in einem "ein"-Zustand zu betreiben, so dass der Sender (1) ein akustisches Signal sendet, und die Signalverarbeitungsmittel (7) dazu ausgebildet sind, den Sender (1) für mindestens eine Zeitspanne in einem "aus"-Zustand zu betreiben, sodass der Sender (1) kein akustisches Signal sendet, wobei die Signalverarbeitungsmittel (7) dazu ausgebildet sind, den Empfänger (2) in einem "aus"-Zustand für zumindest eine Zeitspanne während eines "ein"-Zustandes des Senders (1) und während eines "aus"-Zustandes des Senders (1) für mindestens eine Zeitspanne in einem "ein"-Zustand zu betreiben, und wobei die Signalverarbeitungsmittel (7), insbesondere ein Mikroprozessor (13) der Signalverarbeitungsmittel (7), dazu ausgebildet sind, das Signal des Empfängers (2) zu integrieren, die Schallgeschwindigkeit zu berechnen und die Gaszusammensetzung, die Temperatur und/oder die Feuchtigkeit des Gases basierend auf der Schallgeschwindigkeit zu bestimmen und ein entsprechendes Ausgangssignal bereitzustellen.

## Revendications

1. Procédé pour la détermination de la composition d'un gaz, de la température et/ou de l'humidité d'un gaz en mesurant la vitesse du son dans le gaz à l'aide d'un moyen d'émission de son (1) et d'un récepteur de son (2) qui sont tous deux montés sur une structure commune (3), **caractérisé par** :
- la fourniture d'une structure (3) qui présente une vitesse du son qui est supérieure à la vitesse du son dans le gaz ;
- l'agencement du moyen d'émission (1) et du récepteur (2) sur cette structure (3) côte à côte en parallèle à l'intérieur d'une distance qui est inférieure à 10 mm de telle sorte que le son qui est émis par le moyen d'émission (1) et qui se déplace au sein du gaz puisse atteindre le récepteur (2) seulement via un réflecteur acoustique (6) ;
- le fonctionnement du moyen d'émission (1) pendant au moins une période temporelle dans un état d'activation de telle sorte que le moyen d'émission (1) envoie un signal acoustique et le fonctionnement du moyen d'émission (1) pendant au moins une période temporelle dans un état de désactivation de telle sorte que le moyen d'émission (1) n'envoie pas un signal acoustique ;
- le fonctionnement du récepteur (2) dans un état de désactivation pendant au moins une période temporelle pendant l'état d'activation du moyen d'émission (1) et le fonctionnement du récepteur (2) dans un état d'activation pendant au moins une période temporelle pendant l'état de désactivation du moyen d'émission (1) ; et
- l'intégration du signal du récepteur (2) par un amplificateur (11), le calcul de la vitesse du son à partir de la différence d'angle de phase entre l'excitation du moyen d'émission (1) et le signal du récepteur (2) et la détermination de la composition du gaz, de la température et/ou de l'humidité du gaz sur la base de la vitesse du son.

2. Procédé selon la revendication 1, **caractérisé par** le démarrage de l'état d'activation du récepteur (2) selon un retard après la fin de l'état d'activation du moyen d'émission (1).

3. Procédé selon l'une quelconque des revendications précédentes, **caractérisé par** la fourniture d'une structure mécanique (3) qui présente une vitesse du son qui est au moins cinq fois, de préférence dix fois, supérieure à la vitesse du son dans le gaz.

4. Procédé pour déterminer l'humidité de l'air de balayage de moteur selon l'une quelconque des revendications précédentes 1 à 3

5. Agencement de capteur(s) de gaz adapté de manière à ce qu'il détermine la composition d'un gaz, la température et/ou l'humidité d'un gaz en mesurant la vitesse du son dans le gaz, comprenant une structure commune (3), un moyen d'émission (1) et un récepteur (2), dans lequel le moyen d'émission (1) et le récepteur (2) sont tous deux montés sur la structure commune (3), un moyen de traitement de signal et un amplificateur (11), **caractérisé par** un moyen d'émission de son (1) et par un récepteur acoustique (2) qui sont agencés côte à côte en parallèle à l'intérieur d'une distance qui est inférieure à 10 mm sur cette structure (3), d'où il résulte que le son qui est émis par le moyen d'émission (1) et qui se déplace au sein du gaz peut atteindre le récepteur (2) seulement via un réflecteur acoustique (6), dans lequel, de préférence, le réflecteur acoustique (6) est une paroi d'un tuyau ou une paroi d'un logement d'une chambre et le gaz qui doit être mesuré est à l'intérieur de ce tuyau ou de cette chambre, dans lequel la structure commune (3) présente une vitesse du son qui est supérieure à la vitesse du son dans le gaz et dans lequel le moyen de traitement de signal (7) est configuré de manière à ce qu'il fasse fonctionner le moyen d'émission (1) pendant au moins une période temporelle dans un état d'activation de telle sorte que le moyen d'émission (1) envoie un signal acoustique et le moyen de traitement de signal (7) est configuré de manière à ce qu'il fasse fonctionner le moyen d'émission (1) pendant au moins une période temporelle dans un état de désactivation de telle sorte que le moyen d'émission (1) n'envoie pas un signal acoustique, dans lequel le moyen de traitement de signal (7) est configuré de manière à ce qu'il fasse fonctionner le récepteur (2) dans un état de désactivation pendant au moins une période temporelle pendant l'état d'activation du moyen d'émission (1) et dans un état d'activation pendant au moins une période temporelle pendant l'état de désactivation du moyen d'émission (1), et dans lequel le moyen de traitement de signal (7), de façon particulière un microprocesseur (13) du moyen de traitement de signal (7), est configuré de manière à ce qu'il intègre le signal du récepteur (2), de manière à ce qu'il calcule la vitesse du son et de manière à ce qu'il détermine la composition du gaz, la température et/ou l'humidité du gaz sur la base de la vitesse du son et de manière à ce qu'il fournisse un signal de sortie respectif.
